# EUROPEAN PATENT APPLICATION

(11) **EP 2 552 119 A1**
(43) Date of publication of application: **30.01.2013**
(21) Application number: 12757504.1
(22) Date of filing: 13.02.2012
(51) Int. Cl.: H04N 13/04, G09G 3/20, G09G 3/36, G09G 5/00, G09G 5/36, G02B 27/22

(54) **DISPLAY DEVICE AND DISPLAY METHOD AND**

(30) Priority: 17.03.2011 JP 2011059948
(71) Applicant: Sony Corporation, Tokyo 108-0075 (JP)
(72) Inventor: NAKAHATA, Yuji, Tokyo 108-0075 (JP)
(74) Representative: Ealey, Douglas Ralph
(86) International application number: PCT/JP2012/053216
(87) International publication number: WO 2012/124418

(57) **Abstract**

Reproducibility of a depth of a stereoscopic moving image is improved.

An image of the black brightness is inserted between a right eye image R1 displayed in a second half of a certain frame period and a left eye image L2 in a first half of an immediately following frame period. A period of switching from the right eye image R1 to the left eye image L2 is longer than a period of switching from the left eye image L1 to the right eye image R1. As a result, a user viewing the images may not recognize the images in the combination of the right eye image and the immediately following left eye image but visually recognizes the images easily in the combination of (L1, R1), (L2, R2), (L3, R3), ... of the left and right images at the same time.

## Description

### Technical Field

The present invention relates to a display apparatus and a display method which alternately display a left eye image and a right eye image having parallax using time sharing, and in which each of the left and right eyes of a viewer visually recognizes the images and then realizes stereopsis, and specifically relates to a display apparatus and a display method which suppress lag in the apparent parallax when displaying a moving image.

### Background Art

It is possible to provide a stereoscopic image which may be stereoscopically viewed by a viewer by displaying an image having parallax between the left and right eyes. As one method of providing a stereoscopic image, an example is one in which a viewer wears eyeglasses having specific optical characteristics and an image to which parallax is added is provided to both eyes.

For example, a time sharing stereoscopic image display system is configured by combination of a display apparatus which alternately displays a left eye image and a right eye image, and shutter glasses which are worn by the viewer of the images. The display apparatus alternately displays the left eye image and the right eye image having parallax for a very short period (for example, every vertical blanking period) on a screen. Meanwhile, the shutter glasses, which are worn by the viewer, include a shutter mechanism configured of liquid crystal cells in a left eye section and a right eye section respectively. The shutter glasses are configured such that light is able to penetrate the left eye section of the shutter glasses and the right eye section shields the light during display of the left eye image. In addition, the light is able to penetrate the right eye section of the shutter glasses and the left eye section shields the light during display of the right eye image (see Patent Citations 1 to 3). In other words, the display using time sharing of the left eye image and the right eye image in the display apparatus and selection of the images using the shutter mechanism of the shutter glasses synchronized with switching of display of the display apparatus are performed and thereby a user viewing the images may visually recognize the images as the stereoscopic images.

Generally, the three-dimensional image is configured of a left eye image and a right eye image which are photographed at the same time using cameras arranged in a line to the left and right. Due to the left eye camera and the right eye camera being separated, parallax occurs according to a distance (depth) from the cameras for the same object which is photographed at the same time in the left eye image and the right eye image and which are respectively projected. Parallax appears as a phase difference in the horizontal direction of a screen. Parallax decreases between the left eye images for the object the depth of which is small, and the parallax increases as the depth becomes large. Accordingly, the left eye image and the right eye image which are photographed at the same time are switched between and displayed for a short time and thereby the user viewing the images may visually recognize the images as three-dimensional images, based on the parallax of each object in the displayed images. In addition, the present invention may be applied not only to natural images which are photographed using cameras but also to a case where each of the left and right images is generated using computer-generated graphics.

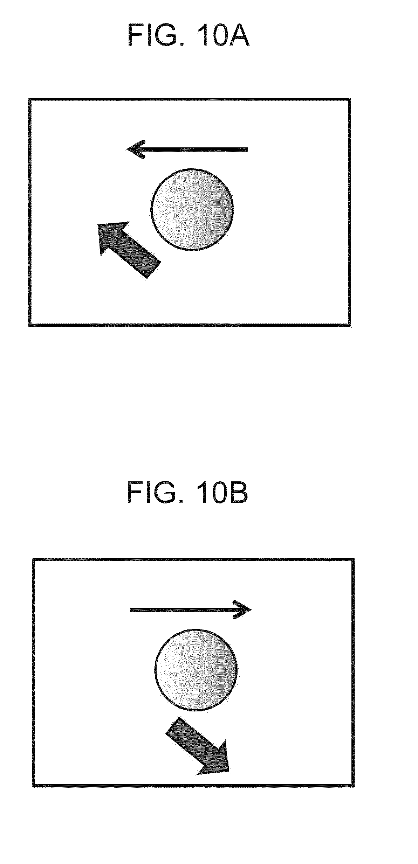

Here, even though the left eye image and the right eye image, which are photographed at the same time, are switched between in a very short period, for example, there is lag of the display timing for the vertical blanking period. For example, when the images are displayed in the order of the left eye image and the right eye image, in an object which moves from the right to the left, the parallax becomes smaller when displaying the right eye image than when displaying the left eye image by the amount of movement to left, and the object is visually recognized as being nearer than it really is (see Fig. 10A). On the contrary, in an object which moves from the left to the right, the parallax becomes larger when displaying the right eye image than when displaying the left eye image by the amount of movement to right, and the object is visually recognized as being further away than it really is (see Fig. 10B). The faster the movement of the object, the more remarkable the lag in the depth is in such a moving image.

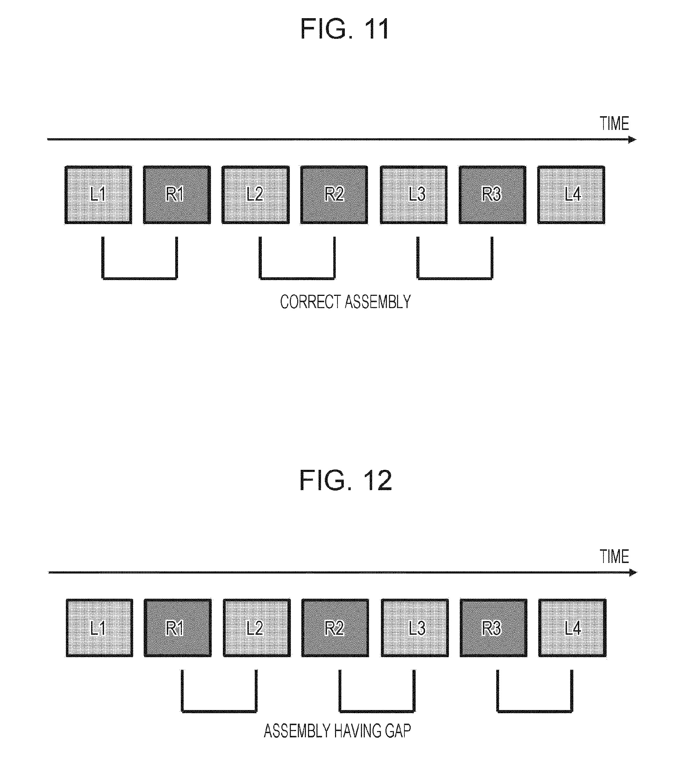

When the images are displayed in the order of the left eye image and the right eye image at the same time (here, L indicates the left eye image and R indicates the right eye image, and the number expresses the display order on the time axis and the same number expresses images photographed at the same time) in a state of L1→R1→L2→R2→L3..., if a user viewing the images may visually recognize the images as combination of (L1, R1), (L2, R2), (L3, R3), ... of the left and right images at the same time, they become correct images (see Fig. 11). However, since the user may also visually recognize the state of (R1, L2), (R2, L3), (R3, L4), ... as the combination of the right eye image and the immediately following left eye image (see Fig. 12), the images having a lagged photographing time are visually recognized as being the same time and specifically, in the image of an object moving at high speed, the viewer easily senses the notable time lag.

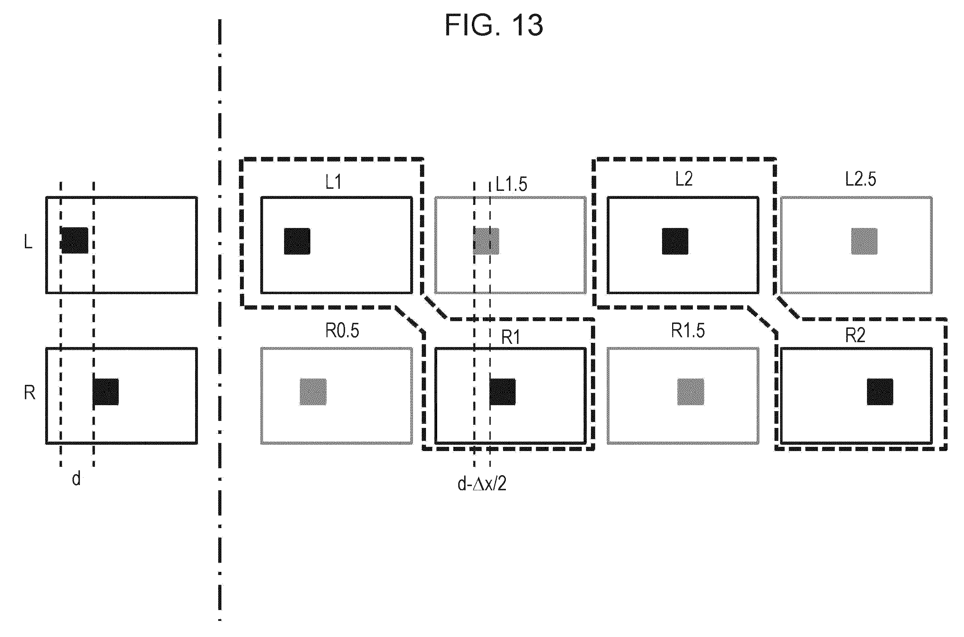

Fig. 13 illustrates an example, in which a left eye image and a right eye image are alternately displayed on a screen, obtained by photographing the shape of an object which has d pixels worth of parallax between the left and right images according to the depth and moves from the left to the right with a movement amount Δxfor every frame period. If the user viewing the images may visually recognize the images as the combination of (L1, R1), (L2, R2), (L3, R3), ... of the left and right images at the same time, as surrounded with dashed lines in the drawing, they become correct images. However, since the right eye image is always displayed later than the left eye image by as much as half frame, the viewer combines the images L1.5, R1.5, L2.5, R2.5... having lag of as much as half frame and then the parallax amount is lagged. In the object having d pixels worth of parallax described above is present, the parallax amount decreases by as much as Δx/2 that is a half of the movement amount Δx for the frame period and the depth is visually recognized having lag more than it really is. Specifically, in the image of the object moving at high speed, the viewer easily senses the notable time lag.

### Citation List

### Patent Literature

PTL 1: Japanese Unexamined Patent Application Publication No. 9-138384
PTL 2: Japanese Unexamined Patent Application Publication No. 2000-36969
PTL 3: Japanese Unexamined Patent Application Publication No. 2003-45343

### Summary of Invention

### Technical Problem

An object of present invention is to provide an excellent display apparatus and a display method which alternately displays a left eye image and a right eye image having parallax using time sharing, and in which each of the left and right eyes of a viewer visually recognizes the images and then may suitably realize stereopsis.

Further object of the present invention is to provide an excellent display apparatus and a display method which suppress a lag of an apparent parallax when displaying a moving image and alternately displays a left eye image and a right eye image in time sharing, and then may suitably realize the stereopsis.

### Solution to Problem

The present application is made considering the problems described above, and the invention described in claim 1 is a display apparatus in which when images are displayed in the order of a first image and a second image at the same time in each frame period, a period of switching from the second image to the first image is longer than a period of switching from the first image to the second image (here, the first image is any one of a left eye image and a right eye image and the second image is the other of the left eye image and the right eye image).

According to the invention described in claim 2 of the present application, the display apparatus described in claim 1 is configured such that after the first image and the second image are alternately displayed at the same time in one frame period, an image of black brightness is displayed.

According to the invention described in claim 3 of the present application, the display apparatus described in claim 1 is configured such that after the first image and the second image are alternately displayed at the same time in one frame period, a non-display period, which is longer than a period between the first image and the second image, is provided.

According to the invention described in claim 4 of the present application, the display apparatus described in claim 1 is configured such that after the first image is written two times and the second image is written two times at the same time in one frame period, the non-display period is provided.

Further, the invention described in claim 5 of the present application is a display method in which when images are displayed in the order of a first image and a second image at the same time in each frame period, a period of switching from the second image to the first image is longer than a period of switching from the first image to the second image (here, the first image is any one of a left eye image and a right eye image and the second image is the other of the left eye image and the right eye image).

### Advantageous Effects of Invention

According to the present invention, an excellent display apparatus and a display method may be provided which suppress lag of an apparent parallax when displaying a stereoscopic moving image and may improve reproducibility of the depth.

Further objects, characteristics and advantages of the present invention will become clear through detailed description, based on the embodiments of the present invention described below and attached drawings.

### Brief Description of Drawings

[Fig. 1] Fig. 1 is a view schematically illustrating a configuration example of an image display system.
[Fig. 2A] Fig. 2A is a view illustrating a control operation of shutter lenses 308 and 209 in shutter glasses 13 synchronized with a display period of a left eye image L of a display apparatus 11.
[Fig. 2B] Fig. 2B is a view illustrating a control operation of shutter lenses 308 and 209 in shutter glasses 13 synchronized with a display period of a right eye image R of a display apparatus 11.
[Fig. 3] Fig. 3 is a view illustrating a driving method in which a period of switching from the right eye image to the left eye image is longer than a period of switching from the left eye image to the right eye image when displaying the images in the order of the left eye image and the right eye image of the same time in each frame period.
[Fig. 4] Fig. 4 is a view illustrating a specific example of a driving method in which a period of switching from the right eye image to the left eye image is longer than a period of switching from the left eye image to the right eye image when displaying the images in the order of the left eye image and the right eye image of the same time in each frame period.
[Fig. 5] Fig. 5 is a view exemplifying a vertical synchronization signal corresponding to the driving method illustrated in Fig. 4.
[Fig. 6] Fig. 6 is a view illustrating another specific example of the driving method in which the period of switching from the right eye image to the left eye image is longer than the period of switching from the left eye image to the right eye image when displaying the images in the order of the left eye image and the right eye image of the same time in each frame period.
[Fig. 7] Fig. 7 is a view exemplifying a vertical synchronization signal corresponding to the driving mechanism illustrated in Fig. 6.
[Fig. 8] Fig. 8 is a view illustrating still another specific example of the driving method in which the period of switching from the right eye image to the left eye image is longer than the period of switching from the left eye image to the right eye image when displaying the images in the order of the left eye image and the right eye image of the same time in each frame period.
[Fig. 9] Fig. 9 is a view exemplifying a vertical synchronization signal corresponding to the driving method illustrated in Fig. 8.
[Fig. 10A] Fig. 10A is a view describing a phenomenon in which a viewer visually recognizes an object, which moves from the right to the left, nearer than it really is.
[Fig. 10B] Fig. 10B is a view describing a phenomenon in which a viewer visually recognizes an object, which moves from the left to the right, nearer than it really is.
[Fig. 11] Fig. 11 is a view illustrating a shape in which a user viewing the images visually recognizes the combination of (L1, R1), (L2, R2), (L3, R3), ... of the left and right images of the same time correctly when displaying the images in the order of the left eye image and the right eye image.
[Fig. 12] Fig. 12 is a view illustrating a shape in which a user viewing the images erroneously visually recognizes the combination of (R1, L2), (R2, L3), (R3, L4), ... of the left and right images having lag of the time.
[Fig. 13] Fig. 13 is a view illustrating an example, in which the left eye image and the right eye image are alternately are displayed on a screen, obtained by photographing a shape of an object which has d pixels worth of parallax between the left and right images according to the depth and moves from the left to the right with a movement amount Δx for every frame period.
[Fig. 14] Fig. 14 is a view comparing a length of a non-displaying period when switching from the left eye image to the right eye image and a length of a non-displaying period when switching from the right eye image to the left eye image.

### Description of Embodiments

Hereinafter, embodiments of the present invention are described in detail with reference to the drawings.

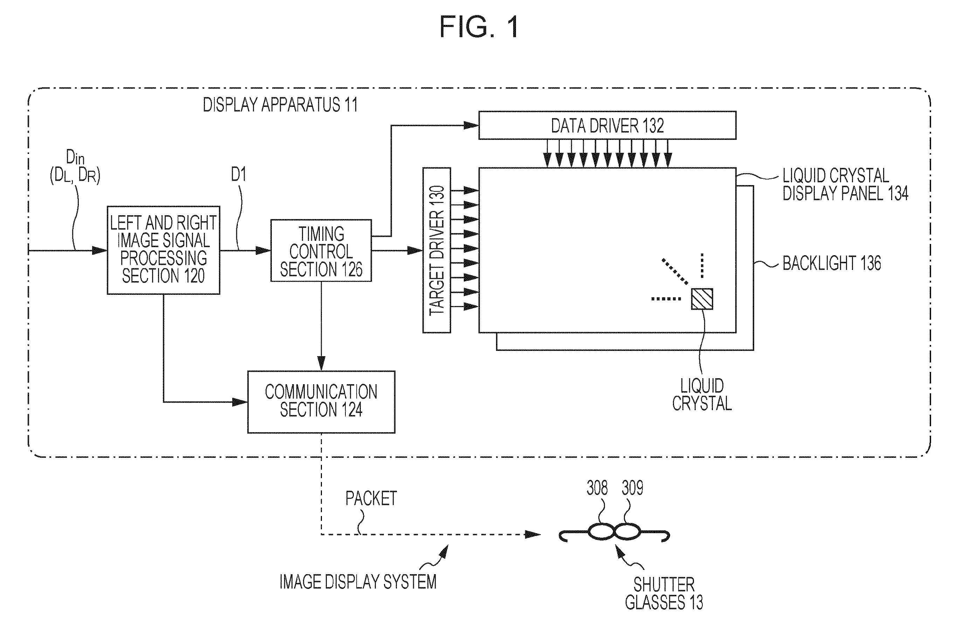

Fig. 1 schematically illustrates a configuration example of an image display system. The image display system is configured by combining a display apparatus 11 corresponding to a three-dimensional display (stereopsis) and shutter glasses 13 including a shutter mechanism at a left eye portion and a right eye portion respectively.

The display apparatus 11 alternately displays the left eye image and the right eye image having a parallax with time sharing when displaying a stereoscopic image. As the display apparatus 11 using for displaying the three-dimensional image, a liquid crystal display (LCD) is used. Generally, the liquid crystal display is an active matrix type in which a TFT (Thin Film Transistor) is arranged in every pixel. The TFT liquid crystal display writes a video signal in every scanning line from an upper portion to a lower portion of the screen and then each pixel is driven. Irradiated light from a backlight is shielded or penetrates each pixel and then the display is performed. However, the gist of the present invention is not limited to a specific method. For example, a plasma display panel (PDP) and an electroluminescence (EL) panel may be used, in addition to a CRT (Cathode Ray Tube) in the related art.

When the display apparatus 11 displays the image as a stereoscopic image and the user wearing the shutter glasses 13 views the displayed image in three dimensions, the shutter glasses 13 are required to perform switching of the opening and closing of the left and right shutter lenses 308 and 309 synchronized with a switching timing of the left eye image and the right eye image at the display apparatus 11 side. In the communication between the display apparatus 11 and the shutter glasses 13, a wireless network is used by wireless communication such as Wi-Fi or IEEE 802.15.4. A packet, in which the information required to control opening and closing timing of the shutter lenses 308 and 309 is written, is transmitted from the display apparatus 11 to the shutter glasses 13. Of course, not only the wireless network but also infrared-ray communication and other communication means may be applied.

The display apparatus 11 includes a left and right image signal processing section 120, a communication section 124, a timing control section 126, a gate driver 130, a data driver 132 and a liquid crystal display panel 134.

The liquid crystal display panel 134 is configured of a liquid crystal layer, opposed transparent electrodes with the liquid crystal layer interposed, a color filter or the like (none illustrated). In addition, a backlight (a surface light source) 136 is arranged behind the liquid crystal display panel 134. The backlight 136 is configured of an LED (Light Emitting Diode) having good persistence characteristics or the like.

An input signal Dᵢₙ, which is configured of left and right image signals D_{L} and D_{R} for displaying the left eye image L and the right eye image R respectively, is input into the left and right image signal processing section 120. An image quality compensating process of image sharpness enhancement or contrast compensation is performed in the left and right image signal processing section 120. In the embodiment, in order to reduce the circuit scale, the sharpness enhancement process is performed after the image signal for the stereopsis, which is supplied, is decoded. Thus, the left and right image signal processing section 120 alternately outputs the left and right image signals D_{L} and D_{R} to alternately display the left eye image L and the right eye image R on the liquid crystal display panel 134.

The left eye image signal D_{L} and the right eye image signal D_{R}, which are changed in the left and right image signal processing section 120, are input into a timing control section 126. The timing control section 126 converts the input left eye image signal D_{L} and the right eye image signal D_{R} into signals for input to the liquid crystal display panel 134 and generates a pulse signal which is used in the operation of the gate driver 130 and the data driver 132. In addition, overdrive is appropriately performed to supplement response speed of the liquid crystal display panel 134.

The gate driver 130 and the data driver 132 receive pulse signals (VSYNC and HSYNC) generated in the timing control section 126 and cause each pixel of the liquid crystal display panel 134 to emit light, based on the input signal. Accordingly, the image is displayed on the liquid crystal display panel 134.

The communication section 124 operates as an access point on the wireless network such as Wi-Fi or IEEE802.15.4, or the like and accommodates at least one pair of shutter glasses 13 operating as a terminal station in its basic service set (BSS). The packets, in which the information required to control the opening and closing timing of the shutter lenses 308 and 309 in the shutter glasses 13 side is written, is transmitted from the communication section 124.

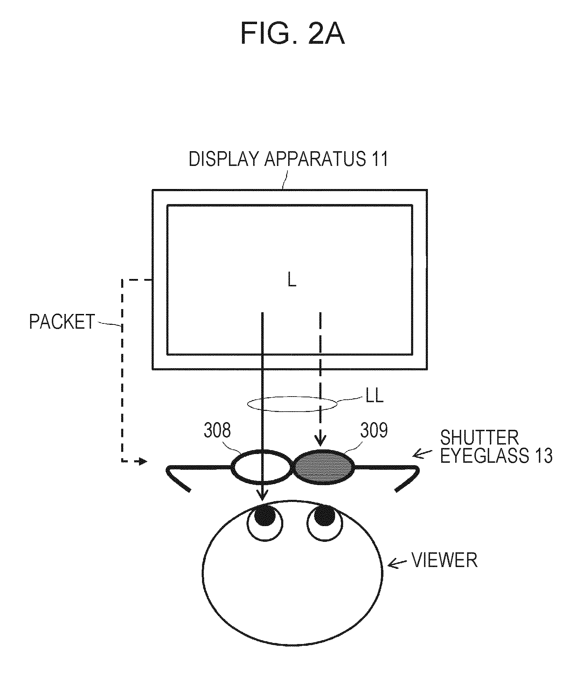

Fig. 2A illustrates the control operation of the shutter lenses 308 and 309 in the shutter glasses 13 synchronized with the display period of the left eye image L of the display apparatus 11. As shown in the drawing, the left eye shutter lens 308 is in an opened state and the right eye shutter lens 309 is in a closed state according to the synchronization packet which is transmitted wirelessly from the display apparatus 11 side in the display period of the left eye image L, and display light LL only reaches the left eye of the user, based on the left eye image L.

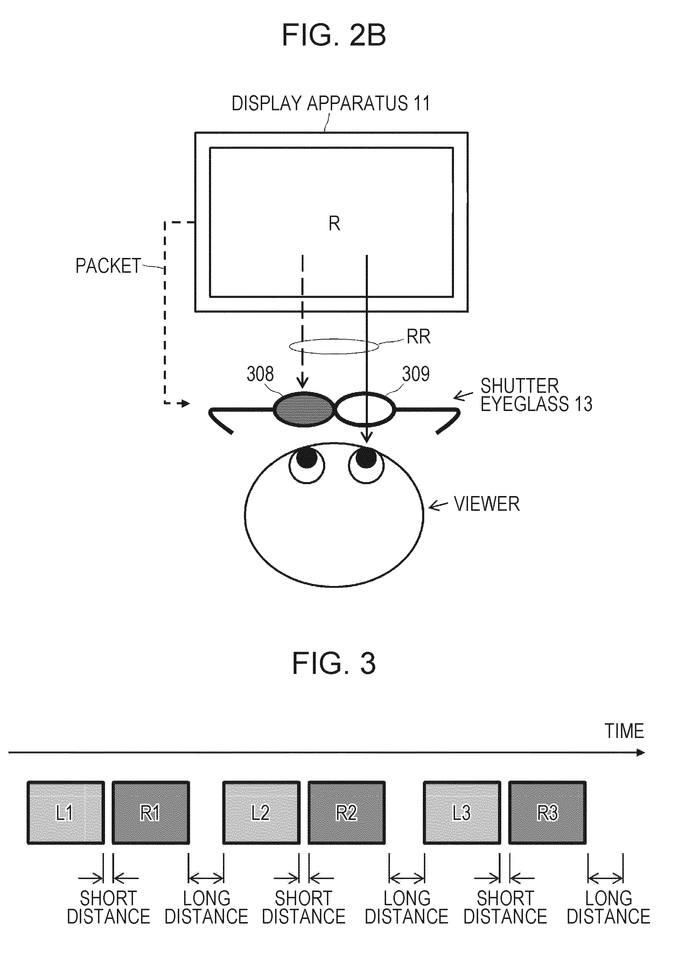

Further, Fig. 2B illustrates the control operation of the shutter lenses 308 and 309 in the shutter glasses 13 synchronized with the display period of the right eye image R. As shown in the drawing, the right eye shutter lens 309 is in the opened state and the left eye shutter lens 308 is in the closed state in the display period of the right eye image R, and display light RR only reaches the right eye of the user, based on the right eye image R.

The display apparatus 11 alternately displays the left eye image L and the right eye image R at the liquid crystal display panel 134 for each field. The left and right shutter lenses 308 and 309 alternately performs the opening and closing operation in the shutter glasses 13 side synchronized with the image switching for each field of the display apparatus 11. The left eye image L and the right eye image R are combined and the image displayed on the display apparatus 11 is recognized three-dimensionally by the user viewing the display images through the shutter glasses 13.

In the time sharing stereoscopic image display type, the driving of the liquid crystal display panel 134 is repeatedly performed in which the frame period is substantially equally divided in two and the left eye image L1 and the right eye image R1 are alternately displayed at the same time, and then the left eye image L2 and the right eye image R2 are alternately displayed in the next frame period.

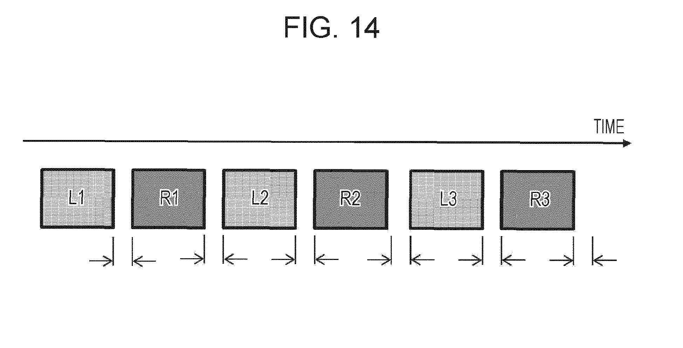

Generally, the lengths of the non-display periods inserted between each of the alternately displayed images are equal to each other. In other words, as shown in Fig. 14, the length of the non-display period when switching from the left eye image L1 to the right eye image R1 in a certain frame period and the length of the non-display period when switching from the right eye image R1 displayed in the second half of the frame period to the left eye image L2 displayed in the first half of the immediately following frame period are equal to each other. This is the same for between L2 and R2 and between R2 and L3, and for between L3 and R3 and between R3 and L4.

Thus, as shown in Fig. 12, the user viewing the images visually recognizes the image correctly as the combination of (L1, R1), (L2, R2), (L3, R3), ... of the left and right images of the same time, but there is concern that the user may erroneously visually recognize the state of (R1, L2), (R2, L3), (R3, L4), ... as the combination of the right eye image and the immediately following left eye image. The latter visually recognizes the images having lag of the photographing time as the images at the same time and as shown in Fig. 13, the depth of the object in the stereoscopic moving image may not be correctly reproduced. Specifically, in the image of the object moving at high speed, the viewer easily senses the notable time lag.

Thus, as shown in Fig. 3, in the display apparatus 11 of the embodiment, the period of switching from the right eye image R1 displayed in the second half of the frame period to the left eye image L2 displayed in the first half of the immediately following frame period is set to be longer than the period of switching from the left eye image L1 to the right eye image R1 in a certain frame period, and then the images are not visually recognized in the combination of the right eye image and the immediately following left eye image as shown in Fig. 12. In addition, although not illustrated in Fig. 3, when the switching period from the right eye image to the left eye image is lengthened, the backlight 136 is turned off or the left and right shutter lenses 308 and 309 of the shutter glasses 13 should be closed together to coincide with the period.

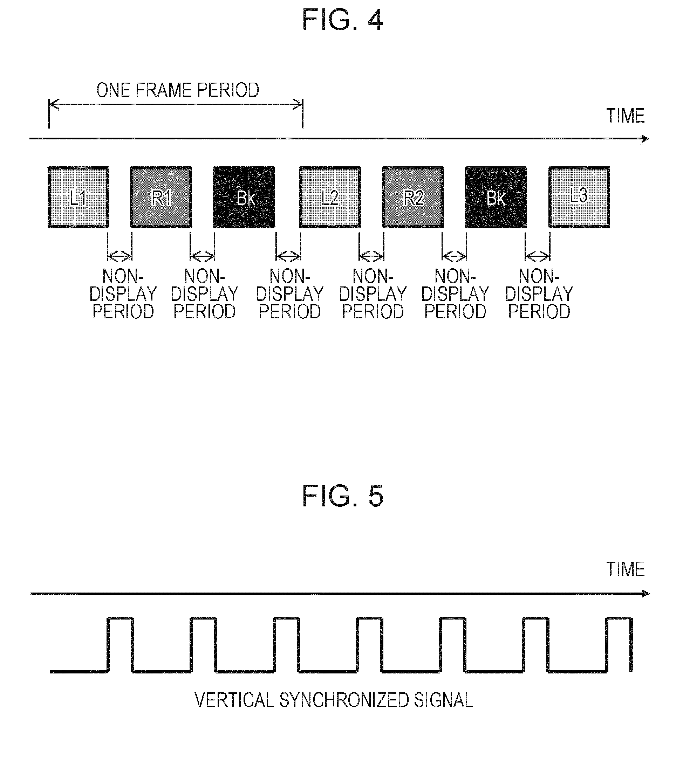

Fig. 4 illustrates a specific example of a driving method for making the period of switching from the right eye image to the left eye image longer than the period of switching from the left eye image to the right eye image, in a case where the images are displayed in the order of the left eye image and the right eye image at the same time in each frame period.

In the example shown in Fig. 4, after each frame period is divided into three and the left eye image and the right eye image at the same time in the one frame period are alternately displayed, a black brightness image (BK) is displayed.

As shown in the same drawing, the black brightness image (BK) is inserted between the right eye image R1 displayed in the second half of a certain frame period and the left eye image L2 in the first half of the immediately following frame period. The period of switching from the right eye image R1 to the left eye image L2 becomes longer than the period of switching from the left eye image L1 to the right eye image R1. As a result, the user viewing the images may not recognize the images in the combination of the right eye image and the immediately following left eye image, but visually recognizes the images easily in the combination of (L1, R1), (L2, R2), (L3, R3), ... of the left and right images at the same time. That is, reproducibility of the depth is improved when displaying the stereoscopic moving image.

When applying the driving method shown in Fig. 4, the timing control section 126 generates the vertical synchronization signal which determines each display period of the left eye image, the right eye image and black brightness image (BK) as shown in Fig. 5. The communication section 124 generates the information required to control the opening and closing timing of the shutter lenses 308 and 309 at the shutter glasses 13 side and may transmit the packet in which the information is described to the shutter glasses 13 side, based on the vertical synchronization signal shown in Fig. 5. Although not shown in Fig. 4, the backlight 136 is turned off or the left and right shutter lenses 308 and 309 of the shutter glasses 13 should be closed together to coincide with the display period of the black brightness image (BK).

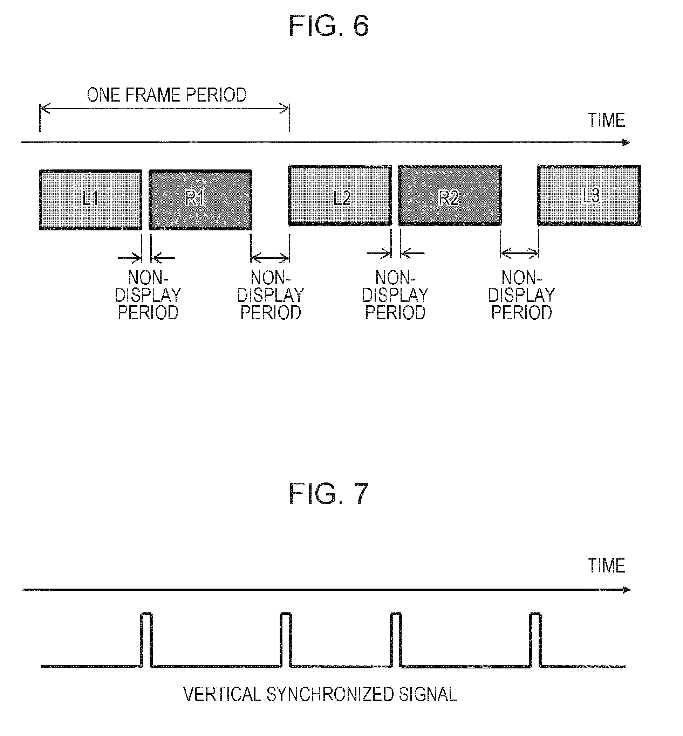

Fig. 6 illustrates another specific example of a driving method for making the period of switching from the right eye image to the left eye image longer than the period of switching from the left eye image to the right eye image, in a case where the images are displayed in the order of the left eye image and the right eye image at the same time in each frame period.

In the example shown in Fig. 6, after alternately displaying the left eye image and the right eye image at the same time in one frame period, the non-display period is provided.

Since a long non-display period is inserted between the right eye image R1 displayed in the second half of a certain frame period and the left eye image L2 in the first half of the immediately following frame period, the period of switching from the right eye image R1 to the left eye image L2 becomes longer than the period of switching from the left eye image L1 to the right eye image R1. As a result, the user viewing the images may not recognize the images in the combination of the right eye image and the immediately following left eye image but visually recognizes the images easily in the combination of (L1, R1), (L2, R2), (L3, R3), ... of the left and right images at the same time. That is, reproducibility of the depth is improved when displaying the stereoscopic moving image.

When applying the driving method shown in Fig. 6, the timing control section 126 generates the vertical synchronization signal where an interval of the vertical blanking period displaying the right eye image is longer than the vertical blanking period displaying the left eye image as shown in Fig. 7. Thus, the latter vertical blanking period provides the non-display period after displaying the right eye image. The communication section 124 generates the information required to control the opening and closing timing of the shutter lenses 308 and 309 at the shutter glasses 13 side and may transmit the packet in which the information is described to the shutter glasses 13 side, based on the vertical synchronization signal shown in Fig. 7. Although not shown in Fig. 6, when the period of switching from the right eye image to the left eye image is long, the backlight 136 is turned off or the left and right shutter lenses 308 and 309 of the shutter glasses 13 should be closed together to coincide with the period thereof.

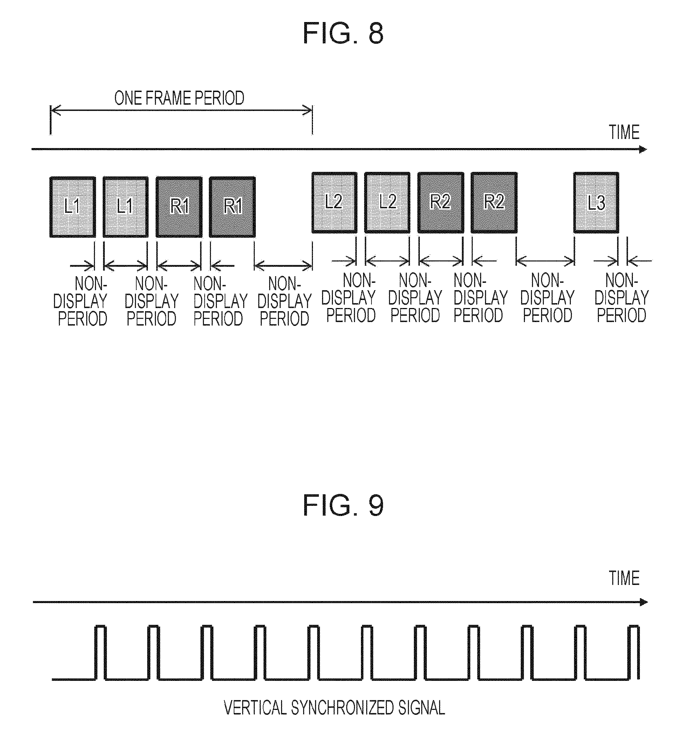

Fig. 8 illustrates still another specific example of a driving method for making the period of switching from the right eye image to the left eye image longer than the period of switching from the left eye image to the right eye image, in a case where the images are displayed in the order of the left eye image and the right eye image at the same time in each frame period.

In the example shown in Fig. 8, a technique is applied in which a driving frequency of the liquid crystal display panel 134 is increased and one frame of the left and right images is displayed (written) on the liquid crystal display panel 134 two or more times. The non-display period is inserted after the left eye image is written two or more times and the right eye image is written two or more times at the same time in one frame period. The image of the black brightness may be displayed instead of the non-display period.

Since the non-display period is inserted between the right eye image R1 displayed in the second time in the second half of a certain frame period and the left eye image L2 displayed in the first time in the first half of the immediately following frame period, the period of switching from the right eye image R1 to the left eye image L2 becomes longer than the period of switching from the left eye image L1 to the right eye image R1. As a result, the user viewing the images may not recognize the images in the combination of the right eye image and the immediately following left eye image but visually recognizes the images easily in the combination of (L1, R1), (L2, R2), (L3, R3), ... of the left and right images at the same time. That is, reproducibility of the depth is improved when displaying the stereoscopic moving image.

Here, writing two or more times is employed with the main purpose of solving the occurrence of crosstalk and insufficient brightness caused by insufficient response speed of the liquid crystal. About the principle of writing the left and right images two or more times, see for example, Japanese Unexamined Patent Application Publication No. 2010-210712 which has been already transferred to the present applicant.

When applying the driving method shown in Fig. 8, the timing control section 126 generates the vertical synchronization signal where the driving frequency is increased as shown in Fig. 9. Thus, the communication section 124 generates the information required to control the opening and closing timing of the shutter lenses 308 and 309 at the shutter glasses 13 side and may transmit the packet in which the information is described to the shutter glasses 13 side, based on the vertical synchronization signal shown in Fig. 7. Although not shown in Fig. 8, when the period of switching from the right eye image to the left eye image is long, the backlight 136 is turned off or the left and right shutter lenses 308 and 309 of the shutter glasses 13 should be closed together to coincide with the period thereof.

### Industrial Applicability

Hereinabove, the present invention is described in detail with reference to the specific embodiments. However, it should be understood by those skilled in the art that various modifications and alterations of the embodiments may occur insofar as they are within the gist of the present invention.

In the specification, the embodiments, which are applied to the display apparatus configured of the liquid crystal display panel are described, however, the present invention may be similarly applied to a case where a plasma display panel (PDP) and an electro luminescence (EL) panel, are used, in addition to a CRT (Cathode Ray Tube) display in the related art.

In addition, the present invention may be similarly applied to a case where the stereoscopic image is applied not only to natural images which are photographed at the same time using cameras arranged in a line to the left and right but also to an artificial image generated using computer-generated graphics.

In short, the present invention is disclosed in example forms and the description in the specification should not be restrictively interpreted. In order to determine the gist of the present invention, the reference should be made to the claims.

### Reference Signs List

- 11: display apparatus
- 13: shutter glasses
- 120: left and right image signal processing section
- 124: communication section
- 126: timing control section
- 130: gate driver
- 132: data driver
- 134: liquid crystal display panel
- 308: (left eye) shutter lens
- 309: (right eye) shutter lens

## Claims

1. A display apparatus in which when images are displayed in the order of a first image and a second image at the same time in each frame period, a period of switching from the second image to the first image is longer than a period of switching from the first image to the second image (here, the first image is any one of a left eye image and a right eye image and the second image is the other of the left eye image and the right eye image).

2. The display apparatus according to claim 1,
wherein after the first image and the second image are alternately displayed at the same time in one frame period, an image of black brightness is displayed.

3. The display apparatus according to claim 1,
wherein after the first image and the second image are alternately displayed at the same time in one frame period, a non-display period, which is longer than a period between the first image and the second image, is provided.

4. The display apparatus according to claim 1,
wherein after the first image is written two times and the second image is written two times at the same time in one frame period, the non-display period is provided.

5. A display method in which when images are displayed in the order of a first image and a second image at the same time in each frame period, a period of switching from the second image to the first image is longer than a period of switching from the first image to the second image (here, the first image is any one of a left eye image and a right eye image and the second image is the other of the left eye image and the right eye image).
